# EUROPEAN PATENT SPECIFICATION

(11) **EP 0 779 955 B1**
(45) Date of publication and mention of the grant of the patent: **29.07.1998**
(21) Application number: 95930655.6
(22) Date of filing: 06.09.1995
(51) Int. Cl.: F16K 5/22, F16K 5/16

(54) **TAPERED PLUG VALVE**
HAHN MIT KONISCHEM KÜKEN
VANNE A BOISSEAU CONIQUE

(30) Priority: 07.09.1994 GB 9417979; 13.07.1995 GB 9514395
(43) Date of publication of application: 25.06.1997
(73) Proprietor: BTR plc, London SW1P 2PL (GB)
(72) Inventor: BUCHAN, Stephen, Mackie, Shropshire TF10 8DD (GB); DENMARK, Martin, William, Shropshire TF4 3TQ (GB); HOLLINGWORTH, Keith, Jeffrey, Shropshire TF7 4DU (GB)
(74) Representative: Treves, Barry William
(86) International application number: GB9502111
(87) International publication number: WO9607844

(56) References cited:
- EP-A- 0 475 481
- EP-A- 0 565 243
- FR-A- 626 553
- FR-A- 2 136 273
- GB-A- 802 497
- US-A- 2 204 440
- US-A- 2 931 380

## Description

This invention relates to a tapered plug valve having a valve body and a tapered plug seated within a correspondingly-shaped bore in the valve body, the plug being rotatable between open and closed positions.

US-A-2931380 (preamble of claim 1) discloses a tapered plug valve having a spring pressing against the wide end of the plug to force it into the bore via an interposed washer. The spring compression and thus the force applied by the spring to the plug may be adjusted by means of a screw-threaded gland mounted on the plug stem and acting on the spring via another interposed washer.

US-A-2204440 discloses a tapered plug valve having a recess at the centre of the wide end of the plug. A sphere is located in the recess. A screw threaded plug is located in a bore in a cover plate and by rotating the plug a force is applied through a thrust disc and a sealing diaphragm to the sphere to urge the plug into its bore.

FR-A-2136273 discloses a tapered plug valve having a construction similar to the valve disclosed in US-A-2204440 with the modification that the thrust disc is replaced by a plug and a plurality of springs. Rotation of the plug varies the compression of the springs thus varying the force on the plug.

GB-A-802497 discloses a tapered plug valve having a spring washer acting against the wide end of the plug. The spring washer may have approximately constant load-deflection characteristics at least through a substantial part of the permissable range of movement of the valve plug to thus make the plug seating force substantially independent of the vertical position of the plug.

EP-A-0565243 discloses a tapered plug valve having a spring applying a force to the wide end of the plug to urge it into the bore, which force is only created after the plug has moved a predetermined distance away from the bore. One or more spacing shims are provided to limit the amount of movement of the plug.

EP-A-0475481 discloses an adjustment device for a centrifugal pump impeller. As screw threaded ring is mounted on a bearing housing and on rotation alters the size of a gap between a surface of the housing and a surface on a frame.

In a conventional tapered plug valve the tapered surface of the plug and/or the seating surface of the bore is/are formed with a system of grooves. A sealant may be introduced through these grooves in order to provide a sealing and lubricating film between the exterior tapered surface of the plug and the interior seating surface of the bore. Usually, although not always, biasing means such as a spring is provided to urge the plug towards the seating surface. However this has the effect of gradually squeezing the sealant from between the plug and the interior seating surface and then any jolt or vibration could cause the plug to stick against the bore.

In use such a tapered plug valve is frequently exposed to extremes of temperature and pressure. Sometimes the line pressure increases suddenly, causing the tapered plug to move momentarily away from the seating surface, allowing line medium into the space formed between the tapered plug and the bore. This medium can remove the sealant film with the result that the plug, on moving back against its seat, can become stuck. The line medium can also move into the spaces at the wide and narrow ends of the plug, so that when the pressure of the medium is applied at the wide end the plug is forced into and sticks in the body bore. Furthermore, if the line medium includes solid particles such as sand or grit, one or more particles can sometimes become positioned between the plug and the bore and cause damage.

If any one of the aforementioned events occurs an operator has to take remedial action, and particularly if the valve is located in a hostile environment, this can be difficult to achieve in practice.

It is an object of the present invention to provide a valve which does not suffer, or is less likely to suffer from any one of the aforementioned disadvantages and can be left unattended for long periods of time (e.g. 18 months) between routine servicing and maintenance.

In accordance with the invention a tapered plug valve comprises a body having a passageway therethrough for flow of medium, a tapered bore intercepting said passageway, a tapered plug rotatably mounted in the bore, adapted to block said passageway in a closed condition of the valve, and having a port adapted to be in communication with said passageway in an open condition of the valve, and a drive shaft for rotation of the plug, and spring means which is capable of urging the plug towards the bore when the plug has moved a predetermined distance away from the bore, and adjustment means to locate the plug and the spring means in relative predetermined positions spaced apart from each other to allow the plug to move said predetermined distance, the spring means being capable of providing a force to urge the plug towards the bore, which force is only created after the plug has moved a distance from the bore as determined by the stiffness of the spring means and/or the adjustment means.

The adjustment means may be movably secured to one of the plug, a drive shaft for the plug and the spring means. For example the adjustment means may comprise an internally screw-threaded collar mounted on an externally screw-threaded region of the shaft and engageable with the spring, or the collar is externally screw-threaded and mounted in a correspondingly screw-threaded aperture of the spring means and engageable with one of the shaft and the plug. The collar may extend to the exterior of the valve body so that adjustment may be made when the valve is fully assembled.

The spring means may be located at any suitable position. For example the spring means may be located within the valve body, within the shaft or externally of the body.

The adjustment means may be located at any suitable position. For example the adjustment means may be located within the valve body, within the shaft or externally of the body.

The drive shaft may be integrally formed with the plug or separate therefrom, the shaft and plug being provided with interengaging formations whereby a driving torque applied to the shaft is transmitted to the plug.

The drive shaft may comprise two parts, the first part which is integral with the plug and the second part which extends out of the valve body and to which an actuator is attached. The two parts may be provided with interengaging formations whereby a driving torque applied to the second part is transmitted to the first part and thence to the plug.

Locking means may be provided to maintain the spring means and the plug in the required relative positions once adjustment has been made.

Eight embodiments of the invention will now be described by way of example only with reference to the accompanying drawings, of which:-
- Figure 1: shows a half side view, half cross-sectional view of a tapered plug valve according to the first embodiment, the section line being parallel to the line of flow and the valve being in the closed condition;
- Figure 2: shows an enlargement of part of the valve shown in Figure 1;
- Figure 3: shows a perspective, part cut-away view of part of a tapered plug valve according to the second embodiment, the valve being in the closed condition;
- Figure 4: shows a cross-sectional view, on an enlarged scale, of partb the valve shown in Figure 3;
- Figure 5: shows a partial cross-sectional view of a tapered plug valve according to the third embodiment, the section line being parallel to the line of flow and the valve being in the closed condition;
- Figure 6: shows a partial cross-sectional view of a tapered plug valve according to the fourth embodiment;
- Figure 7: shows a partial cross-sectional view of a tapered plug valve according to the fifth embodiment;
- Figure 8: shows a cross-sectional view of a tapered plug valve according to the sixth embodiment, the section line being perpendicular to the line of flow and the valve being in the open condition;

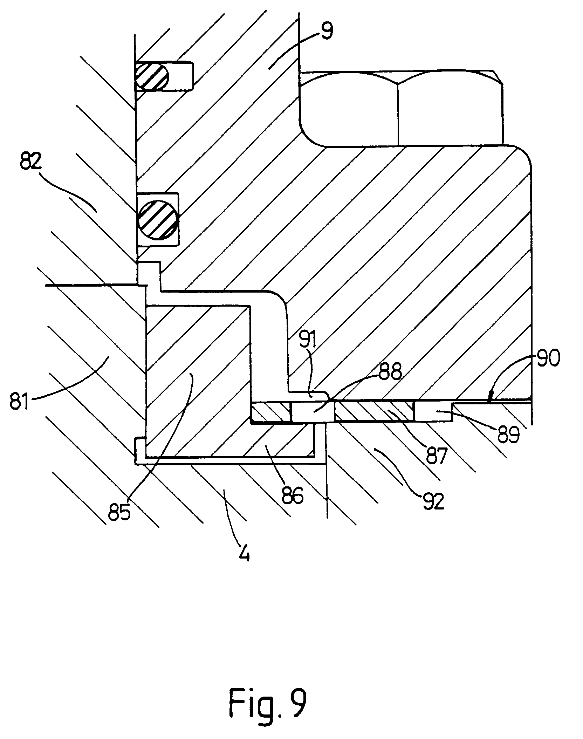

- Figure 9: shows a cross-sectional view, on an enlarged scale, of part of the valve shown in Figure 8;
- Figure 10: shows a simplified, cross-sectional view of part of a tapered plug valve according to the seventh embodiment; plug valve according to the seventh embodiment;
- Figure 11: shows a simplified, cross-sectional view of part of a modified tapered plug valve according to the seventh embodiment; and
- Figure 12: shows a cross-sectional view of a tapered plug valve according to the eighth embodiment.

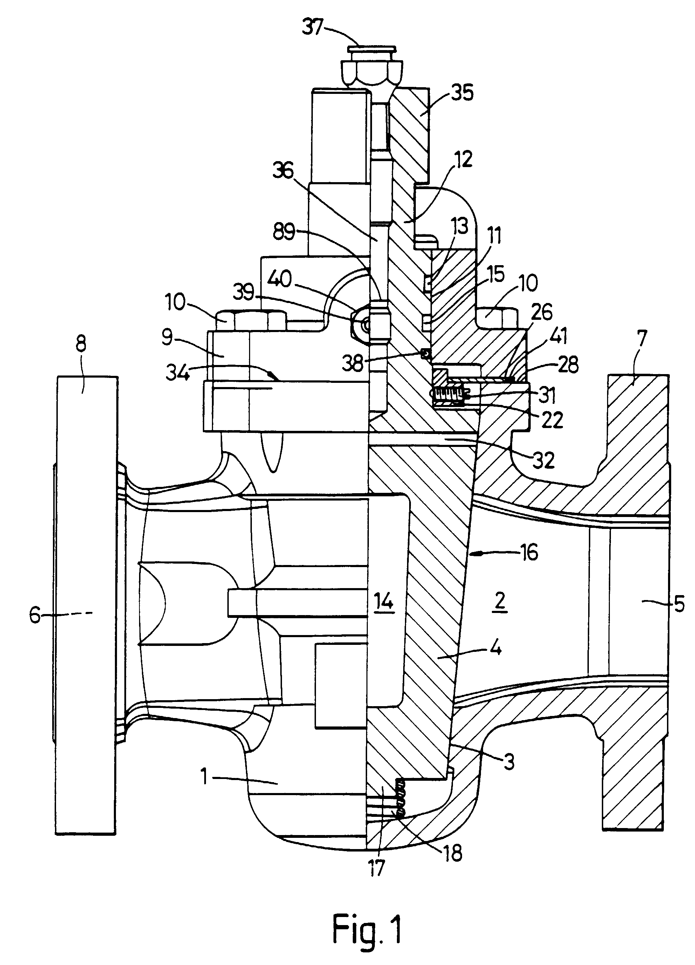

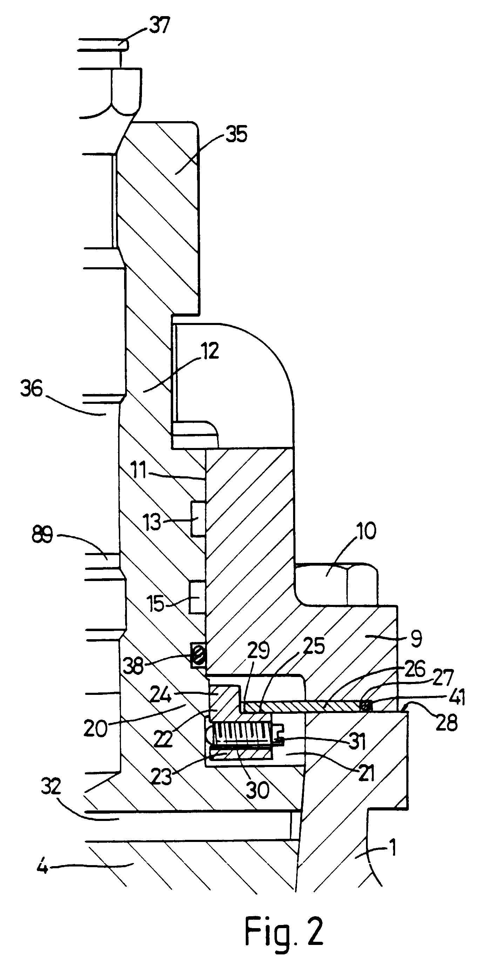

The tapered plug valve according to the first embodiment shown in Figures 1 and 2 comprises a body 1 having a passageway 2 through which line medium may flow and a tapered bore 3 intercepting said passageway within which a tapered plug 4 is located to seat against the bore 3.

The body 1 has an inlet 5 and an outlet 6, each surrounded by flanges 7 and 8 respectively for the attachment of pipework. At the top of the body is a cover 9, connected by bolts 10 to a circular mating surface 34 of the body 1, and located above the tapered bore 3. The cover has a circular aperture 11 formed therein through which a drive shaft 12 enters. An actuator (not shown) connects to a square end 35 at the top of the shaft 12. The plug 4 is integrally formed with the shaft and is caused to rotate between open and closed positions by the actuator applying suitable torque(s) to the drive shaft. The shaft is provided with an upper seal 13, a lubrication groove 15 and a lower '0' ring seal 38. Sealant/lubricant can be injected into the groove 15 via an entry member 39 and check valve 40 provided in the cover 9 so as to provide a lubricating and sealing film between the outer surface of the shaft and the inner surface of the aperture in the region between the two seals 13 and 38. The shaft 12 is positioned at the top of the plug 3, being integrally formed therewith and is formed with a central bore 36 containing an entry member 37 and a check valve 89 through which sealant/lubricant may be injected to lubricating grooves such as at 32 formed on the outer tapered surface 16 of the plug. Thus a lubricating and sealing film may be provided between the outer surface 16 of the plug 4 and the interior surface of the bore 3.

The plug 4 is formed with a port 14 so as to be capable of communicating with the passageway 2 in the open condition of the valve. A short stub 17 is formed at the narrow end at the bottom of the plug and locates a coiled spring 18 in the chamber formed at the lower end of the bore 3. The spring 18 is located on the plug axis against the lower end of the plug and against the bottom of the body in a compressed condition.

A lower region 20 of the shaft 12 in the chamber 21 provided immediately above the wide end at the top of the plug 4 is formed with screw threads. Mounted on this screw-threaded region 20 is an internally screw-threaded collar 22 having a larger diameter lower part 23 and a smaller diameter upper part 24, thus forming a locating shoulder 25 for a flat disc or ring-shaped spring 26. The larger diameter part 23 of the collar is provided with a radially-extending screw-threaded bore 30 within which is located a grub screw 31.

The spring 26 is located by having its periphery firmly secured in a suitable recess 27 on the under surface of the cover 9 against the top mating surface 28 of the valve body 1 and its central region 29 around the central hole in the spring, on the locating shoulder of the collar 22, the upper part 24 of the collar 22 being a sliding fit in the central hole in the spring 26. An '0' ring seal 41 is positioned around the outer periphery of the spring. This spring is of high stiffness as will be described below.

To assemble the valve, the plug 4 without the coil spring 18, is placed in position in the body 1, the collar 22 is screwed down to its lowest possible position and the spring 26 placed on the top surface 28 of the body. A dummy cover is used to hold the spring 18 in position. The collar is then screwed upwards to raise the shoulder 25 into contact with the under surface at the central region of the spring 26. The dummy cover and plug is removed and the grub screw 31 is then tightened in the bore 30 against the shaft 12 to maintain the collar 22 in position, the spring 18 placed in position and the plug replaced. The correct cover 9 is then placed on the body 1, bolted in position by bolts 10 and the assembly of the valve completed. In some instances the spring 18 may be omitted.

In use of the valve the plug 4 is normally under no axial load. The coiled spring 18 (if present) provides a small upwards force sufficient to ensure that the plug 3 is not in sticking contact with its seat on the interior surface of the bore 3, or if the coiled spring is sufficiently strong it reacts against the ring-shaped spring 26 which is applying a downwards force via the collar and the shaft to the top of the plug. The plug is thus maintained under a small force away from the seat but limited to a predetermined amount by the collar 22 acting against the spring 26. When line pressure (i.e. the pressure of the medium flowing through the valve) is applied to the port 14 the plug 3 will tend to move upwards (this tendency increasing if there is a sudden increase in line pressure). The spring 26, being very stiff, will prevent any movement or limit movement to a small amount, predetermined by the position of the collar 26 on the shaft 12, and the spring stiffness.

When sealant is injected into the grooves 32 in the plug to lubricate and seal the plug 4, because the injection pressure is much greater than line pressure, the plug 4 will rise against the force applied by the spring 26 allowing sealant to flow from the grooves to form a film between the plug and the bore. The distance moved is determined by the position of the collar and the stiffness of the spring.

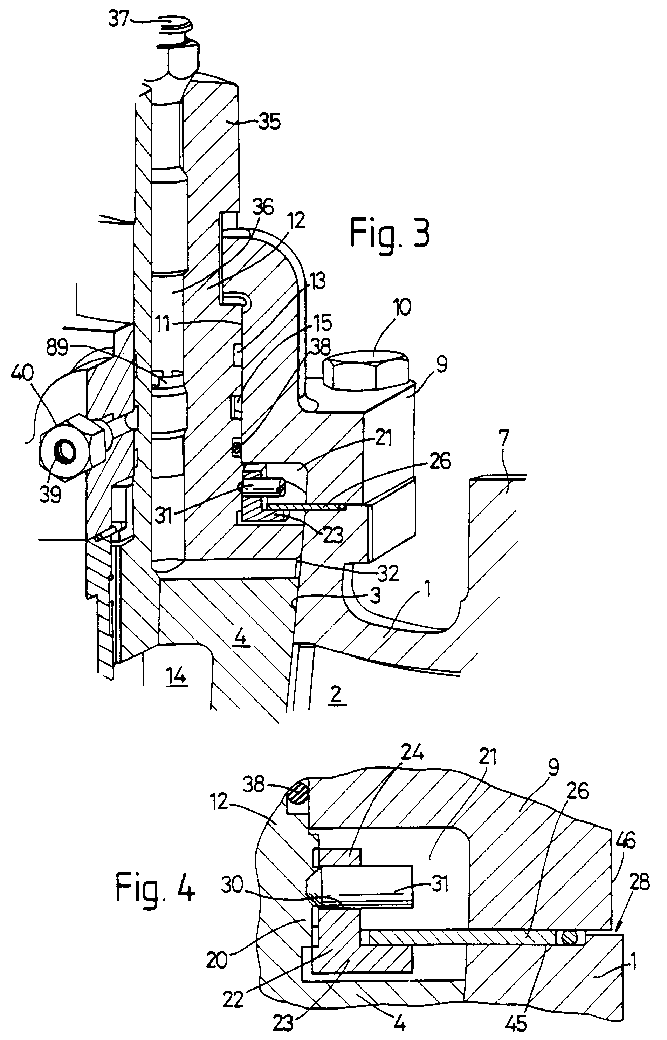

The valve of the second embodiment, shown in Figures 3 and 4, is similar to that of the first embodiment and the same reference numerals have been used for the same features. In this embodiment the spring 26 is located with an '0' ring seal in a recess 45 formed in the top surface 28 of the valve body 1. The grub screw 31 is located in a bore 30 in the upper, smaller diameter part 24 of the collar 22. In other respects the valve is the same as that of the first embodiment.

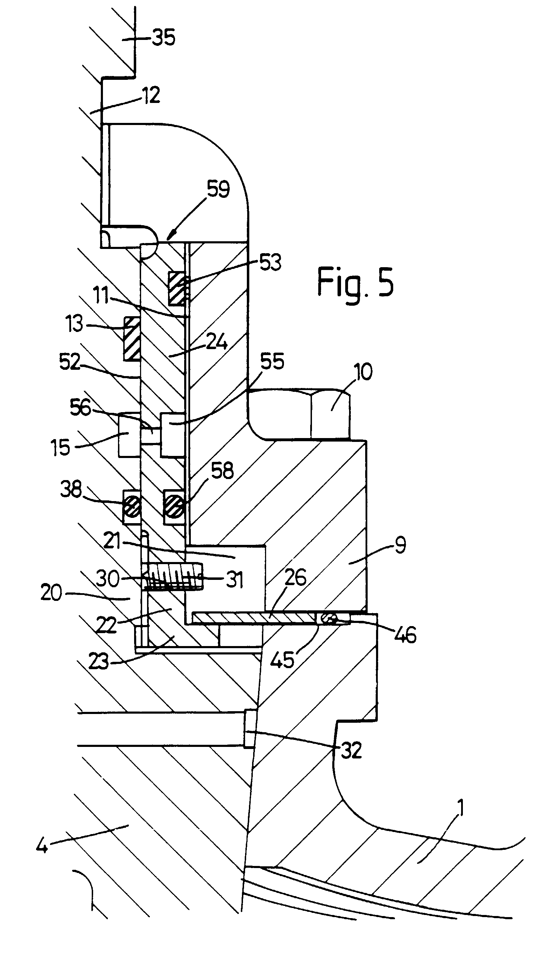

The valve of the third embodiment, shown in Figure 5 is similar to that of the second embodiment and the same reference numerals have been used for the same features. In this embodiment the upper, smaller diameter part 24 of the collar extends upwards to surround the shaft 12 coaxially throughout the length of the aperture 11 in the cover 9, the aperture being of larger diameter compared with that shown in Figures 3 and 4. The upper part of the collar is formed with an upper seal 53, a lower, '0' ring seal 58 and a circumferential groove 55 through which sealant/lubricant may be supplied to form a lubricating and sealing film between the outer surface of the upper part 24 of the collar 22 and the interior surface of the aperture 11 between the seals 53 and 58. The upper seal 13 and lower, '0' ring seal 38 provided on the shaft 12 seal against the interior bore 52 of the collar 22. The circumferential groove 15 in the shaft receives sealant/lubricant from the circumferential groove 55 on the collar through a plurality of circumferentially spaced apart holes 56 connecting the groove to the interior surface of the bore 52. A film of lubricant/sealant is thus provided on the outer surface of the shaft between the seals 13 and 38.

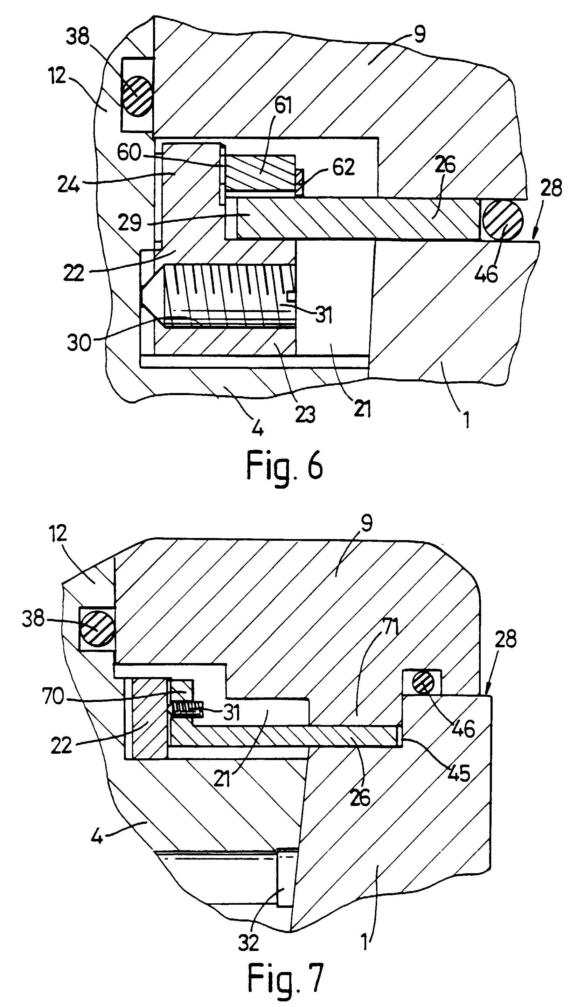

The valve of the fourth embodiment, part of which is shown in Figure 6, has a construction similar to that of the first embodiment and the same reference numerals are used for similar features. In this embodiment the upper, smaller diameter part 24 of the collar 22 is provided with external screw threads 60 and receives a lock nut 61 which may be screwed down against the upper surface of the circumferential inner region 29 of the spring 26. A locking tab 62 is positioned between the under surface of the nut and the spring. However, the engagement of the nut and locking tab with the spring 26, although assisting in maintaining the required distance between the plug and the spring, must be sliding to allow the shaft and collar to rotate to open or close the valve.

In the fifth embodiment of the invention shown in Figure 7 the shaft 12 is not formed with an externally screw-threaded region but is plain-surfaced and the collar 22 is not formed with internal screw threads. The collar is a loose sliding fit on the shaft 12. The collar is of constant external diameter and is externally screw-threaded. The spring 26 is formed at its inner circumferential region with a short, upwardly-extending internally screw-threaded tube 70, which receives the collar 22. The tube 70 is also provided with a bore receiving a grub screw 31. The spring 26 seats in a circular recess 45 formed in the top surface 28 of the valve body 1. The outer part of the spring is sandwiched between the base of the recess and the lower surface of a circular rib 71 formed on the underside of the cover 19.

During assembly, when the plug 4 and spring 26 are in position, the collar 22 is screwed down in the tube 70 until the lower extremity of the collar contacts the top of the plug 4. When in this position the grub screw 31 is tightened and the assembly of the whole valve completed.

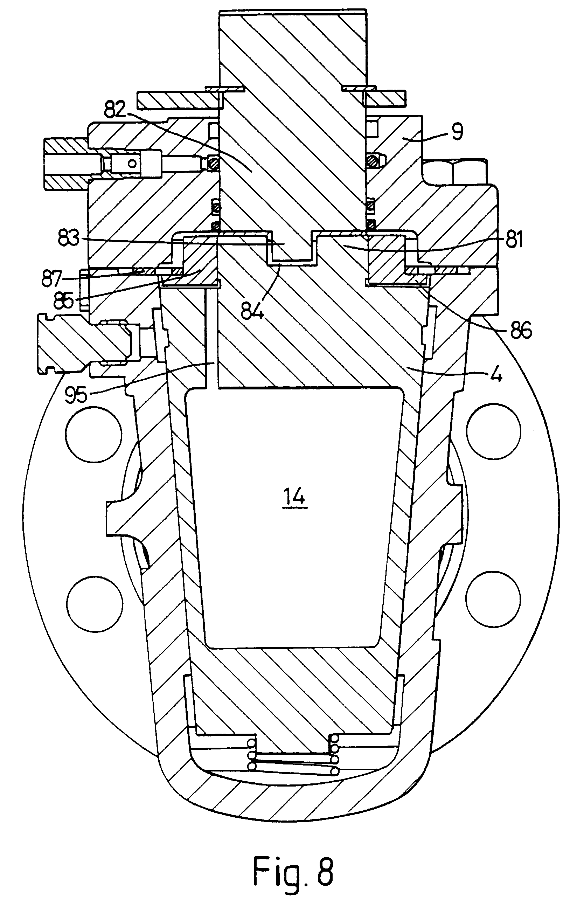

The valve of the sixth embodiment, shown in Figure 8, is similar to the valve of the first embodiment shown in Figure 1, and the same reference numerals will be shown for similar features.

In this embodiment the valve drive shaft is in two parts; a lower part 81 which is integrally formed with the top, wide end of the plug 4 and an upper part 82 which is separate from the lower part and extends through a cover 9 to an actuator (not shown). The lower end of the upper part is formed with a rectangular cross-section tongue 83 extending diametrically of the shaft. The tongue 83 fits into a slot 84 of corresponding cross-section formed in the upper end of the lower part. Thus a torque applied to the upper part may be transmitted to the lower part and then on to the plug 4.

The plug 4 is formed with a port 14 which is connected via a hole 95 to the wide end of the plug at the top to ensure that the pressure there is equal to the line pressure of the medium. A further hole (not shown) with a release valve (not shown) may be provided between the port and narrow end of the plug, depending on various factors such as the value of line pressure and size of valve.

The outer surface of the lower part 81 of the shaft is formed with a screw thread on which is located an internally screw-threaded collar 85. The lower part of the collar 85 has an enlarged diameter in the form of a flange 86, the upper surface of which provides a locating shoulder for a flat ring-shaped spring 87. A plurality of spaced-apart holes 88 are formed in the spring to equalize the pressure and thereby maintain the plug 4 and spring in equilibrium.

The spring 87 seats in a recess 89 formed in the top surface 90 of the valve body so that a radially outer portion is clamped between the cover 9 and the body 92. A small recess 91 of predetermined dimensions is formed in the cover 9 to limit the elastic defection of the radially inner portion of the spring when the plug lifts.

In other respects the valve of this embodiment is the same as that of the first embodiment shown in Figure 1.

By adjusting the collar appropriately the spring will be in equilibrium in normal use since the pressure in the space beneath the cover, above the top, wide end of the plug and around the lower part of the shaft will be equal to line pressure. The spring will only deflect when sealant is injected, causing the plug to lift.

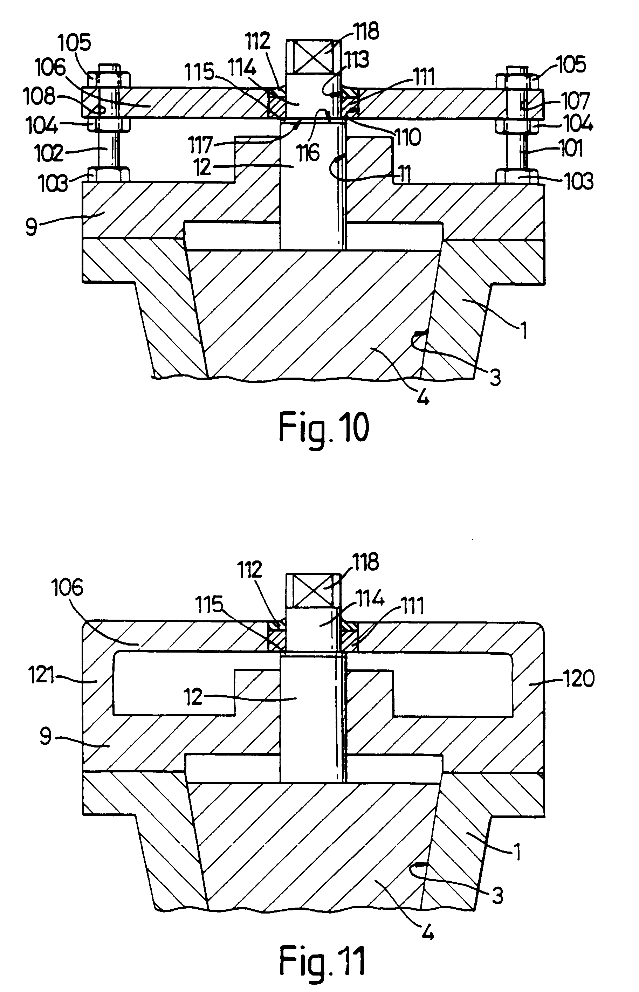

The valve of the seventh embodiment, shown in simplified form in Figure 10, comprises a tapered plug 4 seated in a bore 3 and housed within a valve body 1, the wide end of the plug being at the top.

Attached to the top of the body 1 by bolts (not shown) is a cover 9 having a circular aperture 11 through which a drive shaft 12 passes in a vertical direction. The drive shaft 12 is integrally formed with the plug 4.

The cover 9 is provided with two upstanding screw-threaded pillars 101, 102 each carrying three nuts, 103, 104, 105. A spring beam 106, formed with two circular apertures, 107, 108, one at each end, is supported by the nuts 104 on the pillars 101, 102. At the centre of the beam is a screw-threaded circular aperture 110 within which is an adjusting collar 111 and above that a weather seal 112, each having a central plain-sided bore 113. A reduced diameter upper portion 114 of the shaft 12 extends through the bore 113. A bearing 115 is provided at the shoulder 116 between the upper portion and the remainder of the shaft and rests against the underside 117 of the collar 111. The upper extremity 118 of the shaft 12 has a square cross-section to which an actuator or handle may be attached.

The position of the beam 106 with respect to the cover 9 may be adjusted by means of the nuts 104 on the pillars 101 and 102. The collar 111 is screwed down using an appropriate key until the underside 117 contacts the bearing 115. No downward force is applied to the plug 4. The weather seal 112 is screwed into position above the collar to provide protection. Locking means (not shown) may be provided to maintain the position of the collar once adjustment has been made.

In use the plug 4 is subjected to the line pressure including sudden changes therein, but the spring beam 106 prevents or limits (depending on the spring stiffness) outward movement of the plug 4 away from the bore 3. However if lubricant/sealant is injected through a suitable injection port (not shown) the injection pressure is sufficiently great to cause the spring beam 106 to deform, to allow the plug 4 to move upwards and to allow lubricant/ sealant to flow between the plug 4 and bore 3 to form a thin film.

A modified form of the valve of the seventh embodiment is shown in Figure 11. In this modification the two upright pillars are replaced by two upright members 120, 121, which are integral with the cover 9 and the spring beam 106.

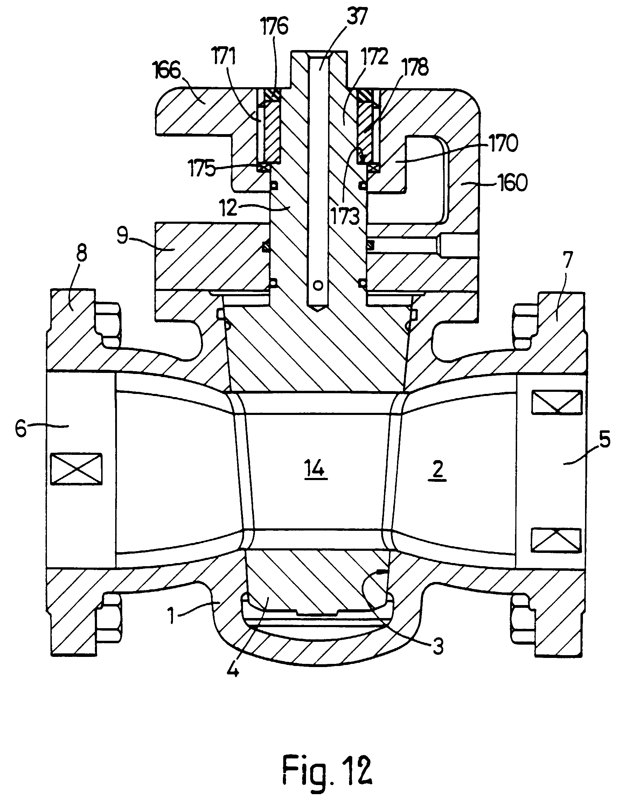

The valve of the eighth embodiment, shown in Figure 12, comprises a valve body 1 housing a tapered plug 4 in a bore 3. The plug 4 has a drive shaft 12 attached thereto. The body head cover 9 is attached by bolts (not shown). Other parts of the valve body are similar to the body of the valve of the first embodiment.

The cover 9 is generally circular and has an upright member 160 at its periphery and a cantilever spring beam 166 extending from the top of the member generally parallel to the plane of and diametrically across the cover 9. The cover 9, member 160 and beam 166 are integrally formed e.g. by casting. The drive shaft 12 extends through the cover 9 and through the spring beam 166.

The spring beam 166 is provided with a boss 170 which extends towards the cover 9. The boss is formed with a screw-threaded circular aperture 171 which receives an externally screw-threaded adjusting collar 178. A reduced diameter portion 172 of the shaft extends through the collar which abuts a bearing 175 on a shoulder 173 formed at the end of the reduced diameter portion.

To set the valve in condition for use the collar 178 is screwed down using an appropriate key until it abuts the bearing 175 on the shoulder 173. No downward force is applied to the plug 4. A weather seal 176 is secured above the collar 178. A locking means (not shown) may be provided to maintain the position of the collar once adjustment has been made.

In use, the plug 4 is subjected to the line pressure of the medium flowing through the valve. Sudden changes may occur in this pressure. The spring beam 166 prevents or limits (depending on the spring stiffness) outward movement of the plug 4 away from the bore 3. If lubricant/sealant is injected through the injection port 37 the injection pressure is sufficiently great to cause the beam 166 to deform, allowing the plug 4 to move away from the bore and allow lubricant/sealant to flow between the plug 4 and the bore 3 to form a thin film.

Considering all the embodiments, various values of line pressure, shaft diameter and sealant pressures for different sizes of valve will result in different upward forces.

For example it was found that in use the plug of a 4" (101.6 mm) size valve (class 300 - maximum line pressure about 800psi (5515.2 KN/m²)) having an integral shaft (as shown in Figure 1) lifted 0.0015" (0.031 mm) against the upper ring shaped spring. When sealant was injected the plug lifted between 0.008" (0.2032 mm) and 0.010" (0.254 mm). Ideally the plug should lift as little as possible, or not at all, under line pressure. However, because shaft diameter increases with increase of valve size the integral shaft/plug configuration is acceptable for valve sizes up to about 4" (101.6 mm), but the two-part shaft configuration (such as shown in Figure 8) is preferable, especially for larger valve sizes.

The lifting of the plug during sealant injection protects the valve body, cover plate and other components against uncontrolled stresses which arise.

## Claims

1. A tapered plug valve comprising a body (1) having a passageway (2) therethrough for flow of medium, a tapered bore (3) intercepting said passageway (2), a tapered plug (4) rotatably mounted in the bore (3), adapted to block said passageway (2) in a closed condition of the valve, and having a port (14) adapted to be in communication with said passageway (22) in an open condition of the valve, and a drive shaft (12) for rotation of the plug (4), and spring means (26;87;106;166) which is capable of urging the plug towards the bore (3) when the plug has moved a predetermined distance away from the bore and adjustment means (22;85;111;178) to locate the plug (4) and the spring means (26;87;106;178) in relative predetermined positions spaced apart from each other to allow the plug to move said predetermined distance characterised in that the spring means (26;87;106;166) is capable of providing a force to urge the plug (4) towards the bore (3), which force is only created after the plug (4) has moved a distance from the bore (3) as determined by the stiffness of the spring means (26;87;106;166) and/or the adjustment means (22;85;111;146;178).

2. A tapered plug valve according to Claim 1 characterised in that the adjustment means (22;85;111;166) is movably secured to one of the plug (4), the shaft (12;133) and the spring means (26;87;106;178).

3. A tapered plug valve according to Claim 2 characterised in that the adjustment means comprises an internally screw-threaded collar (22;85) mounted on an externally screw-threaded region (20;81) of the shaft (12) and is engageable with the spring means (26;87).

4. A tapered plug valve according to Claim 2 characterised in that the collar (26;111;178) is externally screw-threaded and mounted in a correspondingly screw-threaded aperture of the spring means (26;106;166) and engageable with one of the shaft (12) and the plug (4).

5. A tapered plug valve according to Claim 3 or 4 characterised in that the collar (22;85) is positioned within the body (1) of the valve.

6. A tapered plug valve according to Claim 5 characterised in that the collar (85) is positioned within the body (1) of the valve and extends to the exterior thereof.

7. A tapered plug valve according to Claim 3 or 4 characterised in that the collar (111;178) is positioned externally of the body (1) of the valve.

8. A tapered plug valve according to any one of Claims 1 to 6 characterised in that the spring means comprises a flat ring-shaped spring (26;87) having a periphery thereof secured between the body (1) and a cover (9) thereof.

9. A tapered plug valve according to any one of Claims 1 to 7 characterised in that the spring means comprises a beam (106;166) mounted on a cover (9) of the body (1).

10. A tapered plug valve according to Claim 9 characterised in that the beam (106) is mounted on pillars (101,102) on the cover (9).

11. A tapered plug valve according to Claim 9 characterised in that the beam (106;166) is mounted on at least one member (120,121;160) which is integral with the beam (106;166) and the cover (9).

12. A tapered plug valve according to any one of the preceding claims characterised by comprising locking means (31;61) to maintain the spring means (26) and the plug (4) in the relative positions once adjustment has been made.

## Patentansprüche

1. Hahn mit konischem Küken, umfassend einen Körper (1), durch den hindurch ein Durchgang (2) für die Strömung eines Mediums vorgesehen ist, eine konische Bohrung (3), die den Durchgang (2) schneidet, ein konisches Küken (4), das drehbar in der Bohrung (3) angebracht ist, das ausgelegt ist, den Durchgang (2) in einem geschlossenen Zustand des Hahns zu versperren, und das einen Durchlaß (14) aufweist, der angepaßt ist, mit dem Durchgang (22) in einem offenen Zustand des Hahns in Verbindung zu stehen, und eine Antriebswelle (12), um das Küken (4) zu drehen, und ein Federmittel (26; 87; 106; 166), das in der Lage ist, das Küken in Richtung der Bohrung (3) zu drängen, wenn das Küken eine vorbestimmte Entfernung von Bohrung weg zurückgelegt hat, und ein Einstellmittel (22; 85; 111; 178), um das Küken (4) und das Federmittel (26; 87; 106; 178) in relative, vorbestimmte Positionen, die voneinander beabstandet sind, anzuordnen und somit zuzulassen, daß das Küken die vorbestimmte Entfernung zurücklegt,
dadurch **gekennzeichnet,**
daß das Federmittel (26; 87; 106; 166) in der Lage ist, eine Kraft zu schaffen, um das Küken (4) in Richtung der Bohrung (3) zu drängen, wobei die Kraft nur geschaffen wird, nachdem das Küken (4) eine Entfernung von der Bohrung (3) zurückgelegt hat, wie sie durch die Steifheit des Federmittels (26; 87; 106; 166) und/oder das Einstellmittel (22; 85; 111; 178) bestimmt wird.

2. Hahn mit konischem Küken nach Anspruch 1,
dadurch **gekennzeichnet,**
daß das Einstellmittel (22; 85; 111; 166) an einem von dem Küken (4), der Welle (12; 133) und dem Federmittel (26; 87; 106; 178) bewegbar angebracht ist.

3. Hahn mit konischem Küken nach Anspruch 2,
dadurch **gekennzeichnet,**
daß das Einstellmittel einen mit einem Innengewinde versehenen Ring (22; 85) umfaßt, der an einem mit einem Außengewinde versehenen Bereich (20; 81) der Welle (12) angebracht ist und mit dem Federmittel (26; 87) in Eingriff treten kann.

4. Hahn mit konischem Küken nach Anspruch 2,
dadurch **gekennzeichnet,**
daß der Ring (26; 111; 178) mit einem Außengewinde versehen und in einer entsprechend mit einem Außengewinde versehenen Öfnung des Federmittels (26; 106; 166) angebracht ist und mit einem von der Welle (12) und dem Küken (4) in Eingriff treten kann.

5. Hahn mit konischem Küken nach Anspruch 3 oder 4,
dadurch **gekennzeichnet,**
daß der Ring (22; 85) innerhalb des Körpers (1) des Hahns positioniert ist.

6. Hahn mit konischem Küken nach Anspruch 5,
dadurch **gekennzeichnet,**
daß der Ring (85) innerhalb des Körpers (1) des Hahns positioniert ist und sich zu dessen Äußerem erstreckt.

7. Hahn mit konischem Küken nach Anspruch 3 oder 4,
dadurch **gekennzeichnet,**
daß der Ring (111; 178) außerhalb von dem Körper (1) des Hahns positioniert ist.

8. Hahn mit konischem Küken nach einem der Ansprüche 1 bis 6,
dadurch **gekennzeichnet,**
daß das Federmittel eine flache, ringförmige Feder (26; 87) umfaßt, deren Umfang zwischen dem Körper (1) und dessen Abdeckung (9) befestigt ist.

9. Hahn mit konischem Küken nach einem der Ansprüche 1 bis 7,
dadurch **gekennzeichnet,**
daß das Federmittel einen Balken (106; 166) umfaßt, der an einer Abdeckung (9) des Körpers (1) angebracht ist.

10. Hahn mit konischem Küken nach Anspruch 9,
dadurch **gekennzeichnet,**
daß der Balken (106) an Säulen (101, 102) an der Abdeckung (9) angebracht ist.

11. Hahn mit konischem Küken nach Anspruch 9,
dadurch **gekennzeichnet,**
daß der Balken (106; 166) an mindestens einem Element (120, 121; 160) angebracht ist, das integral mit dem Balken (106; 166) und der Abdeckung (9) ist.

12. Hahn mit konischem Küken nach einem der vorhergehenden Ansprüche,
dadurch **gekennzeichnet,**
daß dieser ein Verriegelungsmittel (31; 61) umfaßt, um das Federmittel (26) und das Küken (4) in den Relativpositionen zu halten, sobald eine Einstellung vorgenommen worden ist.

## Revendications

1. Vanne à boisseau conique comprenant un corps (1) comportant un passage (2) au travers de celui-ci pour l'écoulement d'un fluide, un alésage conique (3) étant placé dans ledit passage (2), un boisseau conique (4) monté de manière tournante dans l'alésage (3), destiné à bloquer ledit passage (2) dans l'état fermé de la vanne, et comportant un orifice (14) destiné à être mis en communication avec ledit passage (2) dans l'état ouvert de la vanne, et un arbre d'entraînement (12) pour faire tourner le boisseau (4), et des moyens formant ressort (26 ; 87 ; 106 ; 166) qui sont en mesure de repousser le boisseau en direction de l'alésage (3) lorsque le boisseau s'est écarté de l'alésage d'une distance prédéterminée, et des moyens de réglage (22 ; 85 ; 111 ; 178) destinés à placer le boisseau (4) et les moyens formant ressort (26 ; 87 ; 106 ; 178) dans des positions relatives prédéterminées d'écartement l'un par rapport aux autres pour permettre au boisseau de se déplacer de la distance prédéterminée, caractérisée en ce que les moyens formant ressort (26 ; 87 ; 106 ; 166) sont capables de mettre en oeuvre une force permettant de repousser le boisseau (4) en direction de l'alésage (3), force qui est mise en jeu uniquement après que le boisseau (4) s'est écarté de l'alésage (3) dans une proportion déterminée par la rigidité des éléments formant ressort (26 ; 87 ; 106 ; 166) et/ou les moyens de réglage (22 ; 85 ; 111 ; 178).

2. Vanne à boisseau conique selon la revendication 1, caractérisée en ce que les moyens de réglage (22 ; 85 ; 111 ; 166) sont fixés de manière amovible soit sur le boisseau (4), soit sur l'arbre (12 ; 133), soit sur les moyens formant ressort (26 ; 87 ; 106 ; 178).

3. Vanne à boisseau conique selon la revendication 2, caractérisée en ce que les moyens de réglage comprennent un collet intérieurement fileté (22 ; 85) monté sur une partie extérieurement filetée (20 ; 81) de l'arbre (12) et qui est susceptible d'être amené en prise avec les moyens formant ressort (26 ; 87).

4. Vanne à boisseau conique selon la revendication 2, caractérisée en ce que le collet (26 ; 111 ; 178) est fileté extérieurement et monté dans une ouverture filetée en correspondance des moyens formant ressort (26 ; 106 ; 166) et peut être amené en prise avec soit l'arbre (12), soit le boisseau (4).

5. Vanne à boisseau conique selon la revendication 3 ou 4, caractérisée en ce que le collet (22 ; 85) est placé à l'intérieur du corps (1) de la vanne.

6. Vanne à boisseau conique selon la revendication 5, caractérisée en ce que le collet (85) est placé à l'intérieur du corps (1) de la vanne et s'étend vers l'extérieur de celui-ci.

7. Vanne à boisseau conique selon la revendication 3 ou 4, caractérisée en ce que le collet (111 ; 178) est placé à l'extérieur du corps (1) de la vanne.

8. Vanne à boisseau conique selon l'une quelconque des revendications 1 à 6, caractérisée en ce que les moyens formant ressort comprennent une bague élastique (26 ; 87), dont la périphérie est fixée entre le corps (1) et un couvercle (9) de celui-ci.

9. Vanne à boisseau conique selon l'une quelconque des revendications 1 à 7, caractérisée en ce que les moyens formant ressort comprennent une traverse (106 ; 166) montée sur un couvercle (9) du corps (1).

10. Vanne à boisseau conique selon la revendication 9, caractérisée en ce que la traverse (106) est montée sur des montants (101 ; 102) sur le couvercle (9).

11. Vanne à boisseau conique selon la revendication 9, caractérisée en ce que la traverse (106 ; 166) est montée sur au moins un élément (120, 121 ; 160) qui est solidaire de la traverse (106 ; 166) et du couvercle (9).

12. Vanne à boisseau conique selon l'une quelconque des revendications qui précèdent, caractérisée en ce qu'elle comprend des moyens de verrouillage (31 ; 61) destinés à maintenir les moyens formant ressort (26) et le boisseau (4) dans leurs positions relatives une fois que le réglage a été effectué.
